# EUROPEAN PATENT APPLICATION

(11) **EP 4 443 322 A1**
(43) Date of publication of application: **09.10.2024**
(21) Application number: 21966324.2
(22) Date of filing: 30.11.2021
(51) Int. Cl.: G06F 21/64, H04W 12/069, H04W 12/108, H04W 12/122, H04L 9/32

(54) **NETWORK NODE, CORE NETWORK AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SAMA, Malla Reddy, 80687 Munich (DE)
(74) Representative: Hoffmann Eitle
(86) International application number: PCT/JP2021/043836
(87) International publication number: WO 2023/100238

(57) **Abstract**

A network node includes: a reception unit configured to receive signed data from a terminal; and a control unit configured to determine whether the received data is to be used based on information that is stored in advance and that indicates authenticity of the terminal.

## Description

### FIELD OF THE INVENTION

The present invention relates to a network node, a core network and a communication method in a wireless communication system.

### BACKGROUND OF THE INVENTION

In NR (New Radio) (also referred to as "5G") that is a successor system of LTE (Long Term Evolution), an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., non-patent document 1).

In some use cases of NR or 6G, a technique is being discussed in which data items such as sensor data are collected from a plurality of data sources such as a terminal, an application data server, or the like, and are used for machine learning, etc.

### Citation List

### Non-Patent Document

Non-Patent Document 1: 3GPP TS 23.501 V17.2.0 (2021-09)

### SUMMARY OF THE INVENTION

### TECHNICAL PROBLEM

Malicious terminals can generate malicious data for the purpose of misguiding machine learning and the like. However, according to the conventional discussions, there is a problem that checking of the reliability of data sources in data collection is insufficient.

The present invention has been made in view of the above points, and it is an object of the present invention to improve reliability of data sources in the data collection using the wireless communication system.

### SOLUTION TO PROBLEM

According to the disclosed technique, a network node is provided. The network node includes: a reception unit configured to receive signed data from a terminal; and a control unit configured to determine whether the received data is to be used based on information that is stored in advance and that indicates authenticity of the terminal.

### ADVANTAGEOUS EFFECTS OF INVENTION

According to the disclosed technique, a technique is provided which enables increased reliability of data sources in the data collection using the wireless communication system.

### BRIEF DESCRIPTION OF THE DRAWINGS

[Fig. 1] is a drawing for describing a wireless communication system related to an embodiment of the present invention.
[Fig. 2] is a drawing illustrating an example of a structure of a core network related to an embodiment of the present invention.
[Fig. 3] is a sequence diagram illustrating an example of a flow of processing of terminal authenticity information generation related to an embodiment of the present invention.
[Fig. 4] is a sequence diagram illustrating an example of a flow of processing of checking terminal authenticity related to an embodiment of the present invention.
[Fig. 5] is drawing illustrating an example of a functional structure of a base station related to an embodiment of the present invention.
[Fig. 6] is a drawing illustrating an example of a functional structure of a terminal related to an embodiment of the present invention.
[Fig. 7] is a drawing illustrating an example of a hardware structure of the base station or the terminal related to an embodiment of the present invention.
[Fig. 8] is a drawing illustrating an example of a structure of a vehicle related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (System configuration)

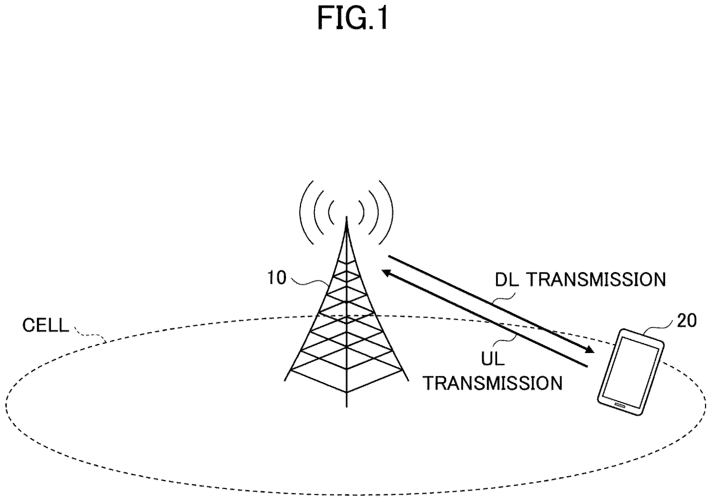

Fig. 1 is a drawing illustrating a wireless communication system related to an embodiment of the present invention.

As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

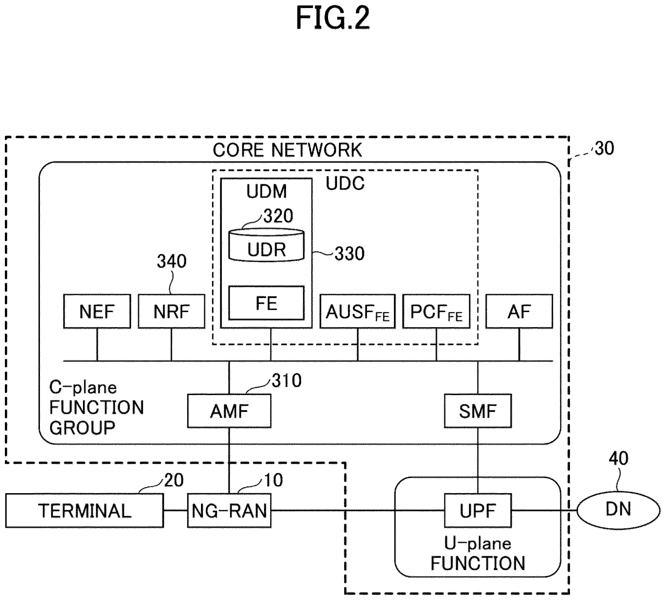

Fig. 2 is a drawing illustrating an example of a structure of a core network related to an embodiment of the present invention. The wireless communication system includes an NG-RAN (Next Generation - Radio Access Network) 10, a terminal 20, a core network 30, and a DN (Data Network) 40.

The core network 30 is a network including an exchange, a subscriber information management device, and the like. The core network 30 includes a network node that supports a U-Plane function, and a network node group that supports a C-Plane function group.

The U-Plane function is a function of performing processing of transmission and reception of user data. The network node that provides the U-Plane function is a UPF (User plane function), for example. The UPF is a network node that has functions of: an external PDU (Protocol Data Unit) session point for the interconnection with the DN 40; packet routing and forwarding; user plane QoS (Quality of Service) handling; and the like. The UPF controls transmission and reception of data between the DN 40 and the terminal 20. The UPF and the DN 40 may include one or more network slices.

The C-Plane function group is a function group the performs a series of control processes for communication establishment, etc. The network node group that implements the C-Plane function group includes an AMF (Access and Mobility Management Function) 310, a UDR (User Data Repository) 320, a UDM (Unified Data Management) 330, and an NRF (Network Repository Function) 340, for example. It is to be noted that the network node group that implements the C-Plane function group may further include network nodes such as an NEF (Network Exposure Function), an AUSF (Authentication Server Function), a PCF (Policy Control Function), an AF (Application Function), and an SMF (Session Management Function).

The NG-RAN 10 is a RAN that is connected to an NR core network 30. The RAN is a network node that is capable of communication, that is connected between the core network 30 and the terminal 20, and that includes a base station, a line control device, and the like. The NG-RAN 10 is connected to, and capable of communicating with, the AMF 310 and the UPF. It is to be noted that, hereinafter, the base station 10 may be referred to as an NG-RAN 10.

The AMF 310 is a network node having functions of terminating the RAN interface, terminating the NAS (Non-Access Stratum), managing registration, managing connection, managing reachability, managing mobility, and the like. The NRF 340 is a network node having a function of discovering NF (Network Function) instances that provide services. The UDM 330 is a network node that manages subscriber data and authentication data. The UDM 330 is connected to a UDR 320 that stores the above-described data;

The SMF is a network node having functions such as session management, Internet Protocol (IP) address assignment and management of terminals 20, a DHCP (Dynamic Host Configuration Protocol) function, an ARP (Address Resolution Protocol) proxy, and a roaming function. The NEF is a network node having a function of indicating capabilities and events to other NFs (Network Functions). The PCF is a network node having a function of performing policy control of the network. The AF is a network node having a function of controlling an application server.

### (Overview of embodiment)

In an embodiment of the present invention, a procedure of generating information indicating the authenticity of the terminal (hereinafter, referred to as terminal authenticity information) before data collection, and checking the authenticity of the terminal by using the terminal authenticity information in the data collection will be described.

As a preparatory step prior to the process of generating terminal authenticity information, the terminal manufacturer receives a terminal certificate from a certificate issuer. The terminal certificate is data for certifying a combination of three elements: a terminal manufacturer, a terminal identification number, and a terminal public key. The terminal identification number is identification information for identifying a terminal. The terminal public key is public key data that is generated for each terminal.

The certificate issuer signs the terminal certificate in advance with a private key for certifying itself (certificate issuer private key). Subsequently, the terminal manufacturer receives a terminal private key corresponding to the terminal certificate from the certificate issuer in advance. The terminal private key is private key data that is generated for each terminal, and is generated to be paired with a terminal public key.

In addition, the certificate issuer distributes a public key (certificate issuer public key) for certifying itself to each device. In other words, network nodes included in the core network 30 are in a state in which the certificate issuer public key can be used.

It is to be noted that the terminal private key and the terminal public key may be generated by the terminal manufacturer, or may be generated by the certificate issuer. The certificate issuer and the terminal manufacturer are in a state in which the terminal private key and the terminal public key can be used in a server device that is managed by each of the certificate issuer and the terminal manufacturer.

The terminal manufacturer configures one terminal certificate and the corresponding terminal private key for one terminal. It is to be noted that it is assumed that a terminal certificate cannot be changed or deleted after the terminal certificate is configured. In addition, it is assumed that the terminal private key is kept secret inside the terminal, and cannot be displayed on a screen of the terminal or cannot be read out by an application program installed in the terminal.

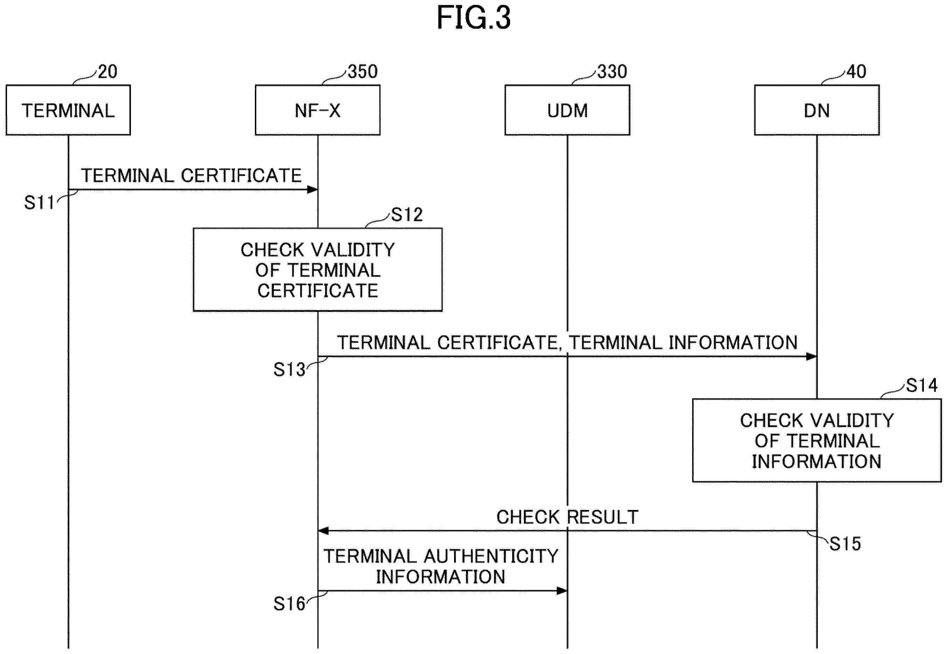

Fig. 3 is a sequence diagram illustrating an example of a flow of processing of terminal authenticity information generation related to an embodiment of the present invention. The processing of terminal authenticity information generation is performed in the registration procedure at the starting time of using the terminal, or is performed before or after the registration procedure.

The terminal 20 transmits a terminal certificate to an NF-X 350 (step S11). It is to be noted that the NF-X 350 is one of network nodes included in the core network 30.

The NF-X 350 receives the terminal certificate from the terminal and checks the validity of the terminal certificate by using the certificate issuer public key (step S12).

After the NF-X 350 confirms that the terminal certificate is valid, the NF-X 350 requests the DN 40 to check the terminal certificate and the terminal information (for example, information including PEI, terminal type, and the like). The DN 40 may be a server device managed by the terminal manufacturer (terminal manufacturer server). The DN 40 checks the validity of the terminal information (step S14), and transmits information indicating the check result to the NF-X 350 (step S15).

After the NF-X 350 receives the information indicating that the validity of the terminal information is confirmed from the DN 40, the NF-X 350 stores the terminal authenticity information in the UDM 330

(step S16). The terminal authenticity information is information indicating the authenticity of the terminal such as information indicating a list of reliable terminals. It is to be noted that the terminal authenticity information may have any format, and may be information that is added as a flag to subscriber information corresponding to the reliable terminals.

It is to be noted that the terminal 20 may start the mobile registration procedure in a case where the combination of the USIM and the terminal is changed. The processing of terminal authenticity information generation may be performed in the mobile registration procedure, or may be performed before or after the mobile registration procedure.

The NF-X 350 is an example of a network node that generates the terminal authenticity information (first network node).

The NF-X 350 or another network node refers to the terminal authenticity information stored in the UDM 330 depending on the necessity. Specifically, network nodes refer to the terminal authenticity information in order to check data sources described below. In addition, in a case where a plurality of terminals perform a collaborative work, the terminal authenticity information may be referred to when the network node selects terminals that participate in the collaborative work.

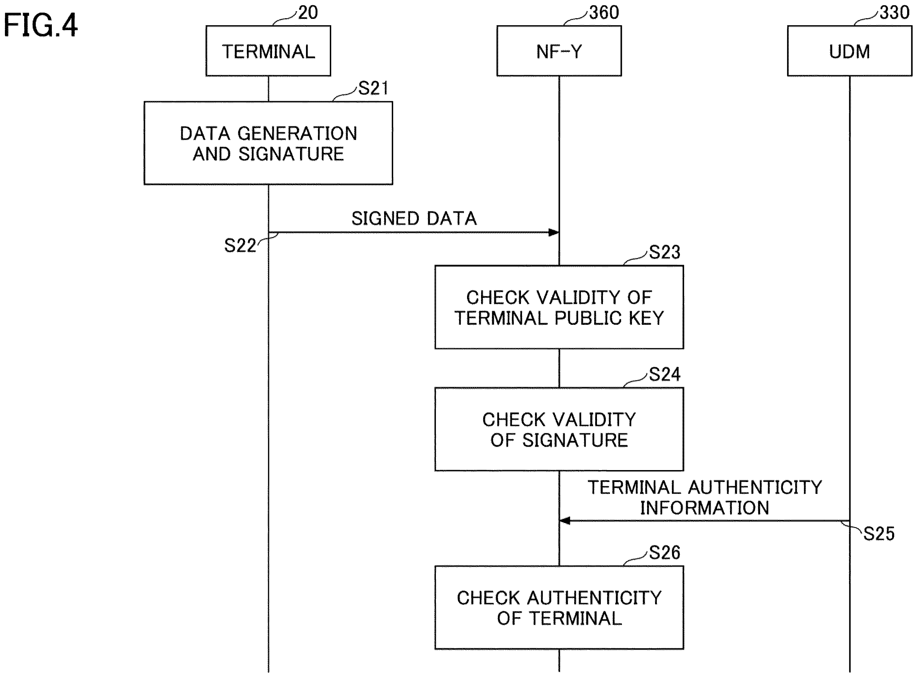

Fig. 4 is a sequence diagram illustrating an example of a flow of processing of checking terminal authenticity related to an embodiment of the present invention. The processing of checking terminal authenticity is a process of checking the authenticity of a terminal in order to check the data source, the process being performed by the NF-X 350 or another network node (hereinafter, referred to as NF-Y 360).

The terminal 20 generates data by using a sensor, etc., and signs the generated data by using the terminal private key of the terminal 20 itself (step S21). Subsequently, the terminal 20 transmits the signed data to the NF-Y 360 (step S22). Here, when the terminal 20 transmits the signed data, the terminal 20 transmits the configured terminal certificate to the NF-Y 360.

When the NF-Y 360 receives the signed data, the NF-Y 360 checks the validity of the transmitted terminal certificate by using the certificate issuer public key (step S23). Furthermore, after confirming the validity of the terminal certificate, the NF-Y 360 checks the validity of the signature by using the terminal public key corresponding to the confirmed terminal certificate (step S24).

The NF-Y 360 refers to the terminal authenticity information stored in the UDM 330 by using the terminal identification number corresponding to the confirmed terminal certificate (step S25), and checks the authenticity of the terminal 20 (step S26).

After the NF-Y 360 confirms the authenticity of the terminal 20, the NF-Y 360 or another network node uses the data received from the terminal 20 for a process of machine learning, or the like.

The NF-Y 360 is an example of a network node that determines whether the received data is to be used based on the terminal authenticity information (second network node).

In addition, the terminal 20 is an example of a data source. In this embodiment, an example is described in which the data source is the terminal 20. However the data source may be another device. For example, the data source may be a server device, or the like, that provides data that is generated by executing an application program.

According to an embodiment of the present invention, the network node that performs data collection can check the authenticity of the data source such as a terminal that transmits data, based on information indicating the authenticity of the data source that is generated before receiving the data.

In an embodiment of the present invention described above, the information indicating the authenticity of the data source may be information indicating the non-authenticity of the data source. In this case, after confirming the non-authenticity of the data source, the NF-Y 360 may avoid using the data transmitted from the data source. In other words, the NF-Y 360 may use the data transmitted from the data source if the non-authenticity of the data source is not confirmed. According to the above-described operation, the network node that performs data collection can select the requested level of reliability of the data source more flexibly.

### (Device configuration)

Next, a functional configuration example of the base station 10, the terminal 20, and various types of network nodes that perform processes and operations described above will be described. The base station 10, the terminal 20, and various types of network nodes include functions for implementing the embodiments described above. It is to be noted, however, that each of the base station 10, the terminal 20, and various types of network nodes may include only some of the functions in the embodiments.

### <Base station 10 and network node>

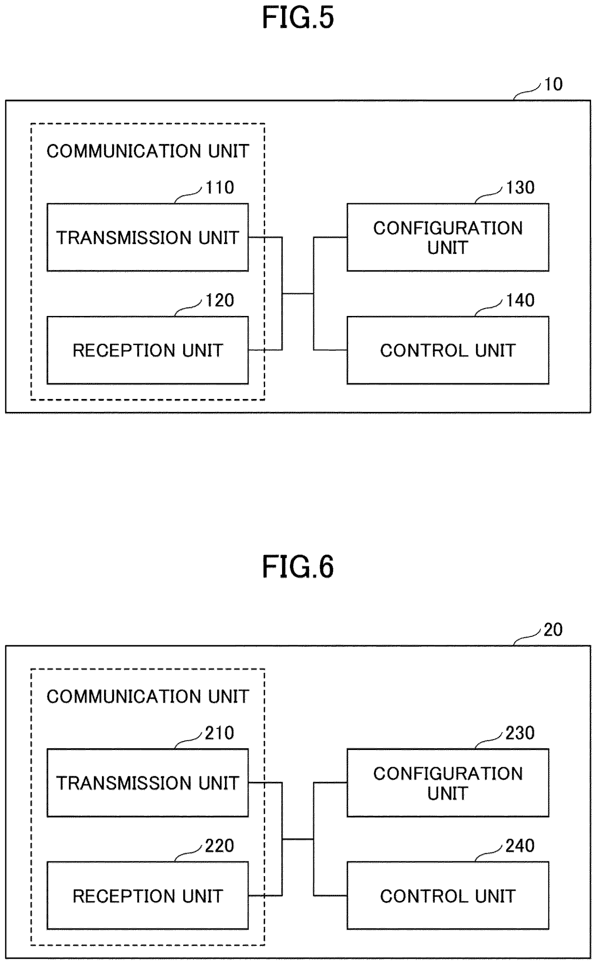

Fig. 5 is a diagram illustrating an example of a functional configuration of the base station 10. As shown in Fig. 5, the base station 10 includes a transmission unit 110, a reception unit 120, a configuration unit 130, and a control unit 140. The functional configuration illustrated in Fig. 5 is merely an example. Functional divisions and names of functional units may be anything as long as operations according to an embodiment of the present invention can be performed. It is to be noted that network nodes may have a similar functional configuration as the base station 10. In addition, the network nodes having a plurality of different functions in the system architecture may be composed of a plurality of network nodes separated for each function.

The transmission unit 110 includes a function for generating a signal to be transmitted to the terminal 20 or to another network node and transmitting the signal in a wired manner or wireless manner. The reception unit 120 includes a function for receiving various types of signals transmitted from the terminal 20 or another network node, and obtaining, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to communications using the NTN.

The control unit 140 performs processing related to communications using the NTN as described in the embodiments. Further, the control unit 140 performs a process related to communications with the terminal 20. Further, the control unit 140 performs a process related to geographical location verification of the terminal 20. The functional units related to signal transmission in the control unit 140 may be included in the transmission unit 110, and the functional units related to signal reception in the control unit 140 may be included in the reception unit 120.

### <Terminal 20>

Fig. 6 is a diagram illustrating an example of a functional configuration of the terminal 20. As shown in Fig. 6, the terminal 20 includes a transmission unit 210, a reception unit 220, a configuration unit 230, and a control unit 240. The functional configuration illustrated in Fig. 6 is merely an example. Functional divisions and names of functional units may be anything as long as operations according to an embodiment of the present invention can be performed. Similar to the terminal 20, the USIM that is attached to the terminal 20 may include a transmission unit 210, a reception unit 220, a configuration unit 230, and a control unit 240.

The transmission unit 210 generates a transmission signal from transmission data and transmits the transmission signal wirelessly. The reception unit 220 receives various signals wirelessly and obtains upper layer signals from the received physical layer signals. Furthermore, the reception unit 220 has a function of receiving NR-PSS, NR-SSS, NR-PBCH, DL/UL control signals, or reference signals transmitted from the network node.

The configuration unit 230 stores various types of configuration information received from the network node via the reception unit 220 in the storage device and reads the configuration information from the storage device depending on the necessity. In addition, the configuration unit 230 also stores pre-configured configuration information.

The network node and the core network in an embodiment of the present invention may be a network node and a core network as described in each item below. In addition, a communication method below may be performed.

### <Configuration related to an embodiment of the present invention>

(First item) A network node including:
a reception unit configured to receive signed data from a terminal; and
a control unit configured to determine whether the received data is to be used based on information that is stored in advance and that indicates authenticity of the terminal.

(Second item) The network node as described in the first item, wherein
the reception unit receives a terminal certificate used for certifying a combination of a terminal manufacturer, a terminal identification number, and a terminal public key from the terminal, and
the control unit checks validity of a signature of the data based on the terminal certificate.

(Third item) A core network including: a first network node; and a second network node, wherein
the first network node includes:
a reception unit configured to receive a terminal certificate used for certifying a combination of a terminal manufacturer, a terminal identification number, and a terminal public key from a terminal; and
a control unit configured to generate information that indicates authenticity of a terminal based on a checking result of validity of the terminal certificate, and
the second network node includes:
   a reception unit configured to receive signed data from a terminal; and
   a control unit configured to determine whether the received data is to be used based on the information that indicates the authenticity of the terminal and that is generated by the control unit included in the first network node.

(Fourth item) A communication method performed by a network node, the communication method including:
receiving signed data from a terminal; and
determining whether the received data is to be used based on information that is stored in advance and that indicates authenticity of the terminal.

According to any one of the above-described configurations, a technique is provided which enables increased reliability of data sources in the data collection using the wireless communication system. According to the second item, the validity of the signature of the data can be checked based on the terminal certificate. According to the third item, information indicating the authenticity of the terminal can be generated based on the check result of the validity of the terminal certificate.

### (Hardware structure)

In the above block diagrams used for describing an embodiment of the present invention (Fig. 5 and Fig. 6), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

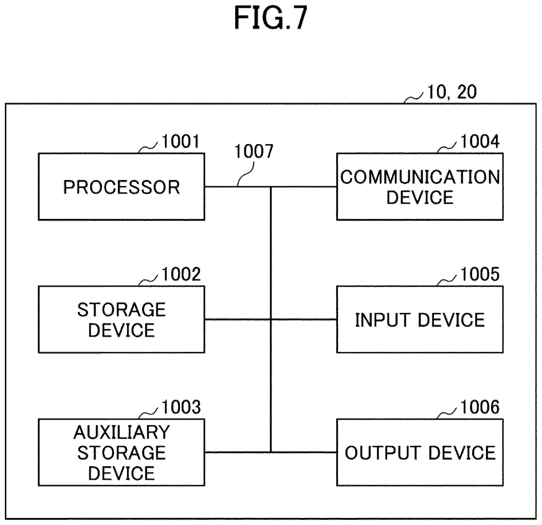

For example, the network node, the terminal 20, etc., according to an embodiment of the present disclosure may function as a computer for processing the wireless communication method of the present disclosure. Fig. 7 is a drawing illustrating an example of hardware structures of the base station 10 and the terminal 20 according to an embodiment of the present invention. The network node may have a hardware configuration that is similar to that of the base station 10. The USIM may have a hardware configuration that is similar to the terminal 20. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 5 may be realized by control programs that are stored in the storage device 1002 and are executed by the processor 1001. Further, for example, the control unit 240 of the terminal 20 illustrated in Fig. 6 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

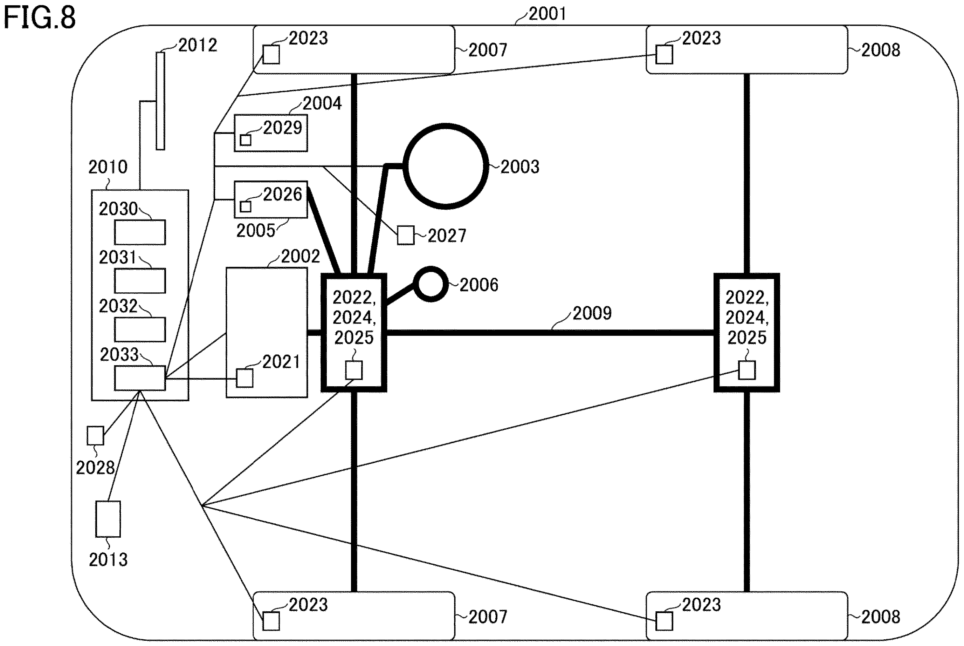

Fig. 8 shows an example of a configuration of a vehicle 2001. As shown in Fig. 8, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW) . According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channelencoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station (NG-RAN)
110 Transmission unit
120 Reception unit
130 Configuration unit
140 Control unit
20 Terminal
30 Core network
40 DN
210 Transmission unit
220 Reception unit
230 Configuration unit
240 Control unit
310 AMF
320 UDR
330 UDM
340 NRF
350 NF-X
360 NF-Y
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node comprising:
a reception unit configured to receive signed data from a terminal; and
a control unit configured to determine whether the received data is to be used based on information that is stored in advance and that indicates authenticity of the terminal.

2. The network node as claimed in claim 1, wherein
the reception unit receives a terminal certificate used for certifying a combination of a terminal manufacturer, a terminal identification number, and a terminal public key from the terminal, and
the control unit checks validity of a signature of the data based on the terminal certificate.

3. A core network comprising: a first network node; and a second network node, wherein
the first network node includes:
a reception unit configured to receive a terminal certificate used for certifying a combination of a terminal manufacturer, a terminal identification number, and a terminal public key from a terminal; and
a control unit configured to generate information that indicates authenticity of a terminal based on a checking result of validity of the terminal certificate, and
the second network node includes:
a reception unit configured to receive signed data from a terminal; and
a control unit configured to determine whether the received data is to be used based on the information that indicates the authenticity of the terminal and that is generated by the control unit included in the first network node.

4. A communication method performed by a network node, the communication method comprising:
receiving signed data from a terminal; and
determining whether the received data is to be used based on information that is stored in advance and that indicates authenticity of the terminal.
